# EUROPÄISCHE PATENTSCHRIFT

(11) **EP 1 521 980 B1**
(45) Veröffentlichungstag und Bekanntmachung des Hinweises auf die Patenterteilung: **17.06.2015**
(21) Anmeldenummer: 03762596.9
(22) Anmeldetag: 03.07.2003
(51) Int. Cl.: B60Q 1/52, G01S 13/58, G01S 13/93

(54) **SYSTEM ZUR VERMEIDUNG EINES AUFFAHRUNFALLS**
SYSTEM FOR PREVENTING A REAR-END COLLISION
SYSTEME DESTINE A EVITER UNE COLLISION PAR L'ARRIERE

(30) Priorität: 05.07.2002 DE 10230266; 16.11.2002 DE 10253529; 25.06.2003 DE 10328755
(43) Veröffentlichungstag der Anmeldung: 13.04.2005
(73) Patentinhaber: Continental Teves AG & Co. oHG, 60488 Frankfurt (DE)
(72) Erfinder: PALLARES TORRES, Simón, 60316 Frankfurt am Main (DE)
(74) Vertreter: Bobbert, Christiana
(86) Internationale Anmeldenummer: PCT/EP2003/007079
(87) Internationale Veröffentlichungsnummer: WO 2004/005962

(56) Entgegenhaltungen:
- WO-A-87/02812
- DE-A- 3 138 377
- DE-A1- 19 933 782
- GB-A- 2 222 710
- GB-A- 2 298 045
- GB-A- 2 331 583

## Beschreibung

Die Erfindung betrifft ein System zur Vermeidung eines zu geringen Abstands von einem Folgefahrzeug zu einem vorausfahrenden Fahrzeug, insbesondere einem Kraftfahrzeug.

Es gibt heute keine Warneinrichtungen, die den Fahrer eines nachfolgenden Fahrzeugs (Folgefahrzeugs) vor einem zu geringen Abstand zu einem vorausfahrenden Fahrzeug warnen.

Andererseits ist ein Verhalten, bei dem kein genügend großer Sicherheitsabstand eingehalten wird, relativ häufig, insbesondere auf Autobahnen, zu beobachten.

Die Warnungen seitens der Behörden in Form von Schildern an der Autobahn oder die Möglichkeiten der Ahndung eines zu geringen Abstands in Form eines Bußgelds erweisen sich als ungenügend zur Verhinderung des zu dichten Auffahrens.

Problematisch ist darüber hinaus, dass Faktoren, die eine Vergrößerung des benötigten Abstands bewirken, wie witterungsbedingte Straßenglätte oder Sichtbehinderungen, von den Fahrzeugführern oft nicht genügend beachtet oder falsch eingeschätzt werden. Im Zusammenspiel mit einer oftmals überhöhten, dass bedeutet unangemessen hohen Fahrzeuggeschwindigkeit, beeinträchtigen diese Faktoren aber entscheidend die Verkehrssicherheit auf den Straßen. Denn wenn dichter Nebel herrscht, wenn es stark regnet oder schneit, insbesondere auch bei Dunkelheit, halten viele Fahrzeug keinen genügenden Sicherheitsabstand ein. Diese äußeren Bedingungen können auch geübten Fahrern Schwierigkeiten bereiten.

Die DE 31 38 377 A betrifft eine Warnleuchte für Kraftfahrzeuge, die als nach hinten leuchtender Rückstrahler mit der Aufschrift "Abstand" am Fahrzeugheck angeordnet ist und immer dann aufleuchtet bzw. blinkt, wenn der für eine ordnungsgemäße Bremsung erforderliche Sicherheitsabstand eines schneller fahrenden nachfolgenden Fahrzeuges unterschritten wird.

Die WO 87/02812 A betrifft ein Warnsystem für Auffahrunfälle von Fahrzeugen, welches eine Radareinrichtung aufweist, die am Heck des Fahrzeuges angeordnet ist, so dass ein Alarm ausgelöst wird, wenn die Distanz und/oder die Geschwindigkeit des von hinten heranfahrenden Fahrzeuges außerhalb einer Sicherheitsdistanz und/oder einer bestimmten Annäherungsgeschwindigkeit liegt.

Die GB 2 331 583 A betrifft ein automatisches Distanzwarnsystem zum Warnen des Fahrers des von hinten heranfahrenden Fahrzeuges.

Die GB 2 298 045 A betrifft eine Distanzwarnvorrichtung. Die Vorrichtung misst den Abstand zwischen dem damit ausgerüsteten Fahrzeug und einem von hinten heranfahrenden Fahrzeug und warnt den Fahrer des von hinten heranfahrenden Fahrzeuges, wenn ein minimaler Sicherheitsabstand unterschritten wird.

Die GB 2 222 710 A betrifft ein System zum Warnen eines Fahrers, wenn er zu dicht auf ein Fahrzeug auffährt oder wenn ein anderes Fahrzeug zu dicht auf sein eigenes Fahrzeug auffährt.

Die DE 199 33 782 A1 betrifft ein Verfahren zur Vermeidung von Auffahrunfällen durch die Beobachtung des rückwärtsgerichteten Verkehrsraums eines ersten Kraftfahrzeugs. Es erfolgt eine Auslösung einer Aktion am ersten Kraftfahrzeug, wenn die berechnete Zeit, bis die beiden Fahrzeuge miteinander kollidieren würden, unter einem vorgegebenen Wert liegt.

Der Erfindung liegt die Aufgabe zugrunde, ein System zu schaffen, mittels dem Auffahrunfälle durch einen zu geringen Sicherheitsabstand zum vorausfahrenden Fahrzeug vermieden werden können.

Die Aufgabe wird durch die Merkmale der unabhängigen Patentansprüche gelöst.

Besonders bevorzugte Ausführungsformen der Erfindung sind in den abhängigen Unteransprüchen angegeben.

Nach der Erfindung ist es vorgesehen, dass das vorausfahrende Fahrzeug eine Einrichtung zur Ermittlung des Abstands zum Folgefahrzeug und zur Ermittlung der Relativgeschwindigkeit in Bezug auf das Folgefahrzeug aufweist, und dass auf Grundlage des ermittelten Abstands und der Relativgeschwindigkeit ein Mindestabstand ermittelt wird und beim Unterschreiten des Mindestabstands Maßnahmen zur Vermeidung einer weiteren Verringerung des Abstands durchgeführt werden, zwecks Vermeidung eines möglichen Auffahrunfalls.

Der Begriff "Mindestabstand" bedeutet einen Abstand zwischen dem vorausfahrenden Fahrzeug und dem Folgefahrzeug, bei dessen Unterschreiten die Gefahr eines Auffahrunfalls besteht.

Die oben beschriebene Vorgehensweise lässt sich wie folgt erläutern: Wird festgestellt, dass sich ein auffahrendes Fahrzeug nähert, so stellt ein Datenverarbeitungsgerät den Moment fest, an dem der Mindestabstand erreicht und unterschritten wird, und löst eine Maßnahme, z.B. ein Lichtsignal, aus. Eine erste Maßnahme wird sofort durchgeführt. Beispielsweise leuchtet ein Lichtsignal - unabhängig vom Bremslicht- sofort auf, sobald das auffahrende Folgefahrzeug zu nahe kommt. Die komplette Steuerung erfolgt automatisch.

Im folgenden Beispiel für eine Kolonnefahrt zeigt sich, wie wichtig die Warnung eines Führers des Folgefahrzeugs ist, um die Reaktionszeit des Fahrzeugführers zu verringern. Es wurden vereinfachte Größen angenommen. Zwei Fahrzeuge A und B fahren im Abstand von 5 m mit der gleichen Geschwindigkeit von 36 km/h (10 m/s) hintereinander. Bremst plötzlich das vordere Fahrzeug scharf, muss das auffahrende Fahrzeug nach höchstens 0,5 s Reaktionszeit bremsen, um nicht aufzufahren. Kommt ein drittes Fahrzeug C mit demselben Abstand und Geschwindigkeit hinzu, muss dieser Fahrzeugführer eine noch schnellere Reaktionszeit haben. Wenn ein Fahrzeugführer bei einer solchen Auffahrsituation verzögert reagiert, kann das System vom vorderen Fahrzeug aus das kritische Verhältnis Geschwindigkeit/Entfernung berechnen und den Sicherheitsabstand so kalkulieren, dass der auffahrende Fahrer die Situation stresslos unter Kontrolle bringt, wenn er bremst, sobald er das Lichtsignal des vor ihm fahrenden Fahrzeugs empfängt. Insbesondere bei Eisregen oder Nebel kann ein Auffahrunfall so vermieden werden.

Vorzugsweise sind am sicheren Heckende des Fahrzeugs Sensoren in einer geschützten Position angeordnet, mit denen das Folgefahrzeug erfasst werden kann. Die Sensoren werden vorzugsweise beweglich gelagert. Sie werden z.B. auf einen beweglichen Träger montiert, der je nach Geschwindigkeit des Fahrzeugs den Messwinkel verändert, um in einer jeweils optimalen Position die Distanz zum auffahrenden Fahrzeug zu messen. Es können insbesondere optische Sensoren, Laser oder Radarsensoren verwendet werden.

Erfindungsgemäß ist es vorgesehen, dass der Abstand und die Relativgeschwindigkeit und auf deren Grundlage ein aktueller Mindestabstand laufend ermittelt werden,

Es ist nach der Erfindung vorgesehen, dass aufgrund eines Vergleichs des aktuellen Mindestabstands mit dem tatsächlich ermittelten Abstand ein Gefahrenpotential ermittelt wird und nach Maßgabe des ermittelten Gefahrenpotentials die Intensität der Maßnahmen variiert wird. Das bedeutet, bei einer Zunahme des Gefahrenpotentials wird auch die Intensität erhöht.

Nach der Erfindung ist es vorgesehen, dass als Maßnahmen zur Vermeidung einer weiteren Verringerung des Abstands optische Warnsignale an den Fahrzeugführer des Folgefahrzeugs übermittelt werden.

Erfindungsgemäß ist es vorgesehen, dass als optische Warnsignale die bei einem Fahrzeug bereits vorhandenen rückwärts gerichteten Leuchteinrichtungen, wie Bremslicht, Blinker bzw. Warnblinker, Nebelschlußleuchte und Rückfahrscheinwerfer, eingesetzt werden.

Nach der Erfindung ist es vorgesehen, dass die Anzahl, die Leuchtintensität und/oder Zeitdauer der optischen Signale nach Maßgabe des ermittelten Gefahrenpotentials variabel eingestellt wird.

Vorzugsweise werden zuerst die Bremslichter, anschließend die Blinker, dann die Rückfahrscheinwerfer und schließlich noch die Nebelschlußleuchte eingeschaltet. Zusätzlich können diese optischen Signale mit einer bestimmten Frequenz übertragen werden, die vorzugsweise bei einer Erhöhung des Gefahrenpotentials zunimmt. Auch die Intensität selbst wird ggf. verändert, beispielsweise wird bei Bremsleuchten mit mehreren Leuchtsegmenten die Anzahl der aufleuchtenden Leuchtsegmente mit Zunahme des Gefahrenpotentials erhöht.

Erfindungsgemäß ist es vorgesehen, dass die Verkehrsituation vor dem vorausfahrenden Fahrzeug ermittelt wird und unter Berücksichtigung der Verkehrssituation die Möglichkeit einer gefahrlosen Beschleunigung des vorausfahrenden Fahrzeugs abgeschätzt wird und dass dann, wenn die Möglichkeit einer gefahrlosen Beschleunigung und ein Unterschreiten des Mindestabstands erkannt wird, als Maßnahme das vorausfahrende Fahrzeug automatisch beschleunigt wird.

Es ist nach der Erfindung vorgesehen, dass bei einem Überschreiten des Mindestabstands die Maßnahmen zur Vermeidung einer weiteren Verringerung des Abstands durch das vorausfahrende Fahrzeug nicht mehr durchgeführt werden.

Nach der Erfindung ist es vorgesehen, dass der Mindestabstand nach Maßgabe weiterer Größen, insbesondere einem ermittelten Fahrbahnzustand und äußerer Witterungsbedingungen, variiert wird.

Erfindungsgemäß ist es vorgesehen, dass als äußere Witterungsbedingungen die die Sichtverhältnisse beeinflussenden Faktoren, wie Nebel, Hagel und/oder Regen, berücksichtigt werden.

Es ist nach der Erfindung vorgesehen, dass als Fahrbahnzustand die den Bremsweg beeinflussende Faktoren, wie Regennässe, Schneebedeckung, Eisglätte oder Verschmutzungen der Fahrbahn, berücksichtigt werden. Dazu berechnet das System den Wetterverhältnissen entsprechend einen größeren Sicherheitsabstand als bei trockenen Straßenverhältnissen, da damit zu rechnen ist, dass sich die Bremswege entsprechend verlängern.

In einer weiteren Ausgestaltung der Erfindung sind die Messwinkel der Sensoren oder Laser automatisch verstellbar. Der Sensor/Laser kann mit einem fixierten oder auch mit einem graduell verstellbaren Messwinkel ausgestattet sein, um die Sicherheit zu erhöhen. Bei schlechtem Wetter wird der Messwinkel des Sensors/Lasers im Vergleich zu seiner Position bei gutem Wetter automatisch verändert. Dies bedeutet, dass der Sensor/Laser den Winkel des projizierten Lichts zur Erfassung des Abstands zum auffahrenden Fahrzeug und der Geschwindigkeit verändert und der einzuhaltende Sicherheitsabstand erhöht wird.

Es ist bekannt, dass Winterreifen den Bremsweg verkürzen, Sommerreifen sind bei Schnee und Eis schnell überfordert. Schon ab +7°C verlieren sie deutlich an Haftung. Dies bedeutet praktisch, dass beim Bremsen auf verschneiter Fahrbahn ein mit Winterreifen und ABS ausgestattetes Fahrzeug bei einer Geschwindigkeit von 80km/h (22,2m/s) etwa 70m bis zum Stillstand braucht. Ein Fahrzeug ohne entsprechende Ausrüstung braucht ca. 110 m. Diese Unterschiede können vom System bei der Ermittlung des Mindestabstands mit berücksichtigt werden.

Erfindungsgemäß werden als weitere Größen die die Fahrsicherheit oder Fahrtüchtigkeit des vorausfahrenden Fahrzeugs beeinflussenden Faktoren, wie ein Motorschaden, ein Reifenschaden oder Fehler in der Betriebsbremse, berücksichtigt. Ein Beispiel zeigt, welche Auswirkungen eintreten, wenn die Auffahrzeit nicht genügend beachtet wird. Auch hier wurden vereinfachte Größen angenommen. Zwei Fahrzeuge A und B fahren im Abstand von 20 m mit der gleichen Geschwindigkeit von 75 km/h (20,8 m/s) hintereinander. Bremst plötzlich das vordere Fahrzeug A mit einer Verzögerung von angenommenen 3,5 m/s², wird das auffahrende Fahrzeug B bei unveränderter Geschwindigkeit innerhalb von höchstens 3,3 s auf A auffahren und einen Unfall verursachen. Nach diesen 3,3 s ist die Geschwindigkeit von A immerhin ca. 32,4 km/h (9,0 m/s). Das plötzliche Bersten eines Reifens eines Fahrzeugs ist unter Umständen kontrollierbar, dennoch hängt es von dem Abstand bzw. Geschwindigkeit und des herannahenden Fahrzeugs ab, ob es zu einem Auffahrunfall kommt oder nicht. Gefahrensituationen für die unmittelbar beteiligten Fahrzeuge bei einem Fahrzeugschaden werden durch das System daher erheblich reduziert.

Das erfindungsgemäße System wird beispielhaft anhand der folgenden Abbildungen (Fig.1 bis Fig.6) und deren Beschreibung erläutert.

Die Fig.1 zeigt ein vorausfahrendes Fahrzeug mit Sensoren zur Erkennung des Abstands und der Relativgeschwindigkeit zu einem Folgefahrzeug in einer Draufsicht.

Die Fig.2 zeigt ein vorausfahrendes Fahrzeug mit Sensoren zur Erkennung des Abstands und der Relativgeschwindigkeit und ein Folgefahrzeug in einer Draufsicht.

Die Fig.3 zeigt die Ermittlung eines Mindestabstands für eine erste Fahrsituation.

Die Fig.4 zeigt die Ermittlung eines Mindestabstands für eine zweite Fahrsituation.

Die Fig.5 veranschaulicht die Funktionsabläufe bei dem System nach der Erfindung in einer schematischen Übersicht.

Die Fig.6 zeigt ein Flussdiagramm der Funktionsabläufe bei dem System nach der Erfindung in einer schematischen Übersicht.

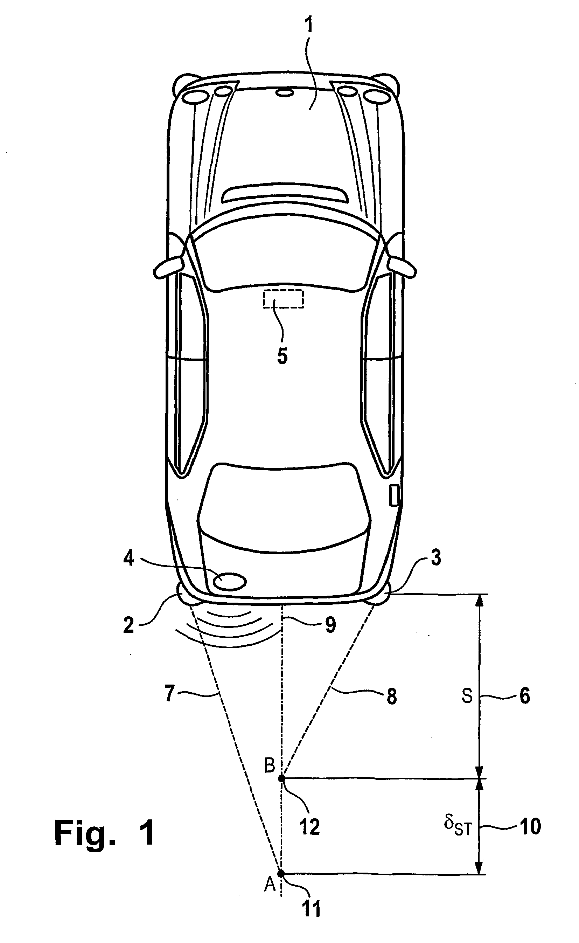

Das in Fig.1 gezeigte vorausfahrende Fahrzeug 1 ist mit zwei im Heckbereich des Fahrzeugs angeordneten Sensoren 2,3 ausgerüstet, die Daten erfassen, auf deren Grundlage die Entfernung und die Geschwindigkeit eines auffahrenden Fahrzeugs in einer Ermittlungseinheit (Rechner 5) ermittelt werden. Dazu sind die Sensoren 2,3 mit dem Rechner 5 verbunden, der mit einem für die erforderlichen Berechnungen ausgestatteten Programm (Software) die erfassten Sensor-Daten permanent auswertet. Das System nach der Erfindung hilft gefährliche Situationen zu vermeiden, indem es dem nachfolgenden Fahrzeugfahrer z.B. über ein Lichtsignal 4, wie Warnblinker oder Bremslichter, rechtzeitig signalisiert, die Geschwindigkeit zu reduzieren.

Insbesondere ermittelt der Rechner 5 einen jeweils angepassten Mindestabstand s 6 zum einem auffahrenden Fahrzeug. Dazu entsenden die Sensoren 2,3 zwei rückwärts gerichtete Lichtstrahlen 7,8 in Richtung der rückwärtigen Fahrbahn mit einem bestimmten Verlauf diagonal bis zur Mittellinie 9 des Fahrzeugs 1. Die Entfernung dieser zwei Lichtstrahlen 7,8 zum Fahrzeug 1 und ihre Entfernung voneinander ist je nach Fahrsituation und äußeren Bedingungen variabel einstellbar. Sie passt sich also den Umständen und der Geschwindigkeit des Fahrzeugs 1 sowie den Wetterbedingungen der Umgebung an, aber unterschreitet in keinem Fall den jeweils notwendigen Sicherheitsabstand s 6. Die zwei Lichtstrahlen 7,8 werden in einer Entfernung δ_{ST} 10 voneinander auf die Fahrbahn ausgesendet. Der Abstand δ_{ST} 10 ergibt sich durch die Differenz der Schnittpunkte A,B 11,12 der beiden Sensorstrahlen 7,8 mit Mittellinie 9. Überwachung und Ermittlung vom Zentralcomputer 5 aufgrund der von den Sensoren 2,3 übermittelten Daten erfolgt kontinuierlich.

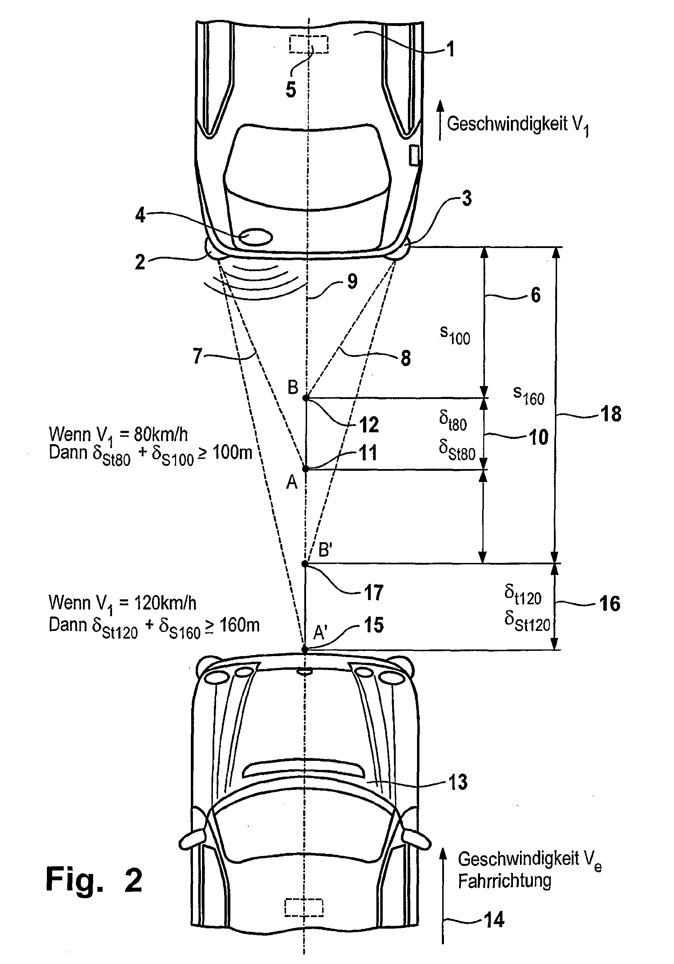

In der Fig. 2 ist die Situation bei Annäherung eines Folgefahrzeugs 13 für zwei unterschiedliche Fahrsituationen dargestellt. Das Folgefahrzeug 13 nähert sich in Fahrtrichtung 14 von hinten und verringert den Abstand zum Fahrzeug 1, das mit der Geschwindigkeit V₁, z.B. 80 km/h, vorausfährt. Das Folgefahrzeug 13 löst die Berechnung seiner Entfernung zum Fahrzeug 1 durch den Zentralcomputer 5 in dem Moment aus, in dem es den ausgesendeten Lichtstrahl 7 bei Punkt A 11 unterbricht. Es legt bei weiterer Annäherung an das Fahrzeug 1 die Entfernung δ_{ST,80} 10 zwischen dem Punkt A 11 und Punkt B 12 in einer gewissen Zeit δ_{t,80} zurück. Beim Erreichen des Punktes B 12 wird die Zeitdauer (δ_{t,80}) gemessen, die das Fahrzeug 13 dafür brauchte.

Der Zentralcomputer 5 errechnet dann, wie lange das Fahrzeug 13 benötigen würde, um bei gleichbleibender Geschwindigkeit Vc das Fahrzeug 1 zu erreichen und ermittelt den unter den gegebenen Umständen angemessenen Sicherheitsabstand s₁₀₀ 6. Ein Lichtsignal 4 wird aktiviert, sobald der errechnete Sicherheitsabstand s₁₀₀ 6 vom auffahrenden Fahrzeug 13 erreicht bzw. unterschritten wird. Erreicht das auffahrende Fahrzeug 13 den Punkt B 12 nicht oder fällt es hinter Punkt A 11 zurück, dann bewegt es sich in der gleichen oder einer geringeren Geschwindigkeit als das Fahrzeug 1.

In der zweiten in Fig.2 dargestellten Fahrsituationen fährt das Fahrzeug 1 mit der Geschwindigkeit von z.B. 120 km/h voraus. Das Folgefahrzeug 13 nähert sich in Fahrtrichtung 14 von hinten und verringert den Abstand. Das Folgefahrzeug 13 löst die Berechnung seiner Entfernung zum Fahrzeug 1 durch den Zentralcomputer 5 in dem Moment aus, in dem es den ausgesendeten Lichtstrahl 7 bei Punkt A' 15 unterbricht. Es legt bei weiterer Annäherung an das Fahrzeug 1 die Entfernung δ_{ST,120} 16 zwischen dem Punkt A' 15 und Punkt B' 17 in einer gewissen Zeit δ_{t,120} zurück. Beim Erreichen des Punktes B' 17 wird die Zeitdauer (δ_{t,120}) gemessen, die das Fahrzeug 13 dafür brauchte.

Der Zentralcomputer 5 errechnet dann, wie lange das Fahrzeug 13 benötigen würde, um bei gleichbleibender Geschwindigkeit Vc das Fahrzeug 1 zu erreichen und ermittelt den unter den gegebenen Umständen angemessenen Sicherheitsabstand s₁₆₀ 18. Der Lichtsignal 4 wird aktiviert, sobald der errechnete Sicherheitsabstand s₁₆₀ 18 vom auffahrenden Fahrzeug 13 erreicht bzw. unterschritten wird. Erreicht das auffahrende Fahrzeug 13 den Punkt B' 17 nicht oder fällt es hinter Punkt A' 15 zurück, dann bewegt es sich in der gleichen oder einer geringeren Geschwindigkeit als das Fahrzeug 1.

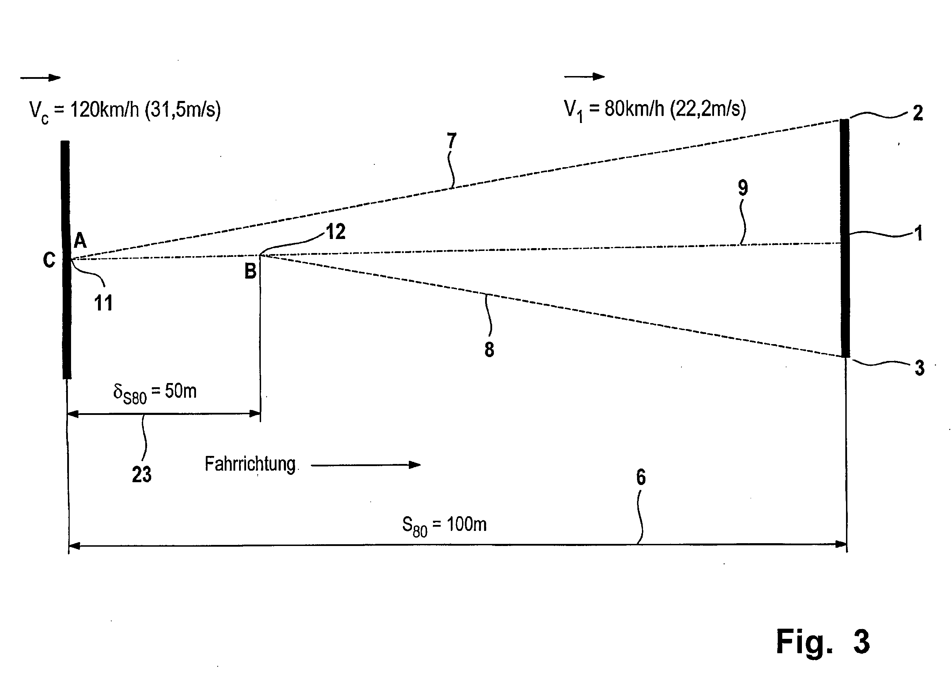

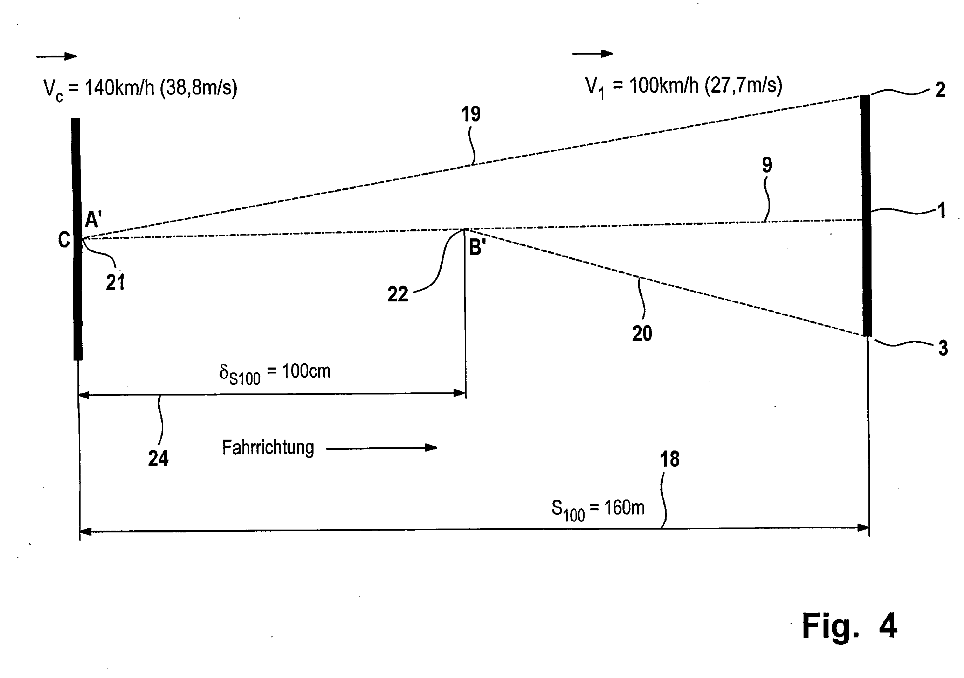

Die Fig. 3 und Fig.4 zeigt die Anpassung an die Geschwindigkeit des vorausfahrenden Fahrzeugs 1 in schematischer Darstellung. Vorzugsweise wird dann der Sensor 2,3 bzw. der Sensorstrahl abhängig von der Geschwindigkeit V₁ des Fahrzeugs 1, z. B. mit Hilfe eines elektrischen Antriebs, automatisch verstellt. Der Antrieb zum Verstellen wird durch den Rechner 5 gesteuert. Auf diese Weise kann auch die Geschwindigkeit des auffahrenden Fahrzeugs 13 erfasst werden.

Wie in Fig. 3 zu erkennen ist, werden bei einer Fahrzeuggeschwindigkeit V₁ von 80 km/h und V_{c} von 120 km/h die Lichtstrahlen 7,8 in einer Entfernung δ_{S,80} 23 und in einer Entfernung von S₈₀ 6, hier 100 m vom Fahrzeug 1, voneinander auf die Fahrbahn ausgesendet, diese Entfernung beträgt hier 50 cm und entspricht dem Abstand zwischen den Punkten A 11 und B 12 auf der Mittellinie 9. Diese Entfernung δ_{S,80} 23 dient dazu, Daten auf der Grundlage der zwischen den Punkten A und B durchgeführten Berechnungen zu erhalten. Die Entfernung zwischen den beiden Punkten A 11 und B 12 kann z. B. zwischen ca. 50 cm und ca. 100 cm, nach Geschwindigkeit, variieren.

Bei höheren Fahrzeuggeschwindigkeit V₁ von 100 km/h und ebenfalls, um den gleichen Betrag von 40 km/h höheren Fahrzeuggeschwindigkeit V_{c} von 140 km/h, werden die Lichtstrahlen 19,20 in einer Entfernung δ_{S,100} 24 voneinander und in einer Entfernung von S₁₀₀ 18, hier 160 m vom Fahrzeug 1, auf die Fahrbahn ausgesendet, diese Entfernung beträgt hier 100 cm und entspricht dem Abstand zwischen den Punkten A' 21 und B' 22 auf der Mittellinie 9. In dem Moment, in dem das Folgefahrzeug den ausgesendeten Lichtstrahl 7 bzw. 19 bei Punkt A bzw. A" unterbricht, löst es die Berechnung seiner Entfernung zum Fahrzeug 1 durch den Zentralcomputer 5 aus. Bei Erreichen des Punktes B bzw. B' wird die Zeit gemessen und die sichere Mindestdistanz S errechnet.

Als Sensoren sind im hinteren Bereich des Fahrzeugs 1 regensichere und staubgeschützte Radarsensoren oder Laserensoren angeordnet. Bei einer alternativen Ausführungsform werden zwei optoelektronische Sensoren eingesetzt.

Während der Fahrzeugführer in stehenden Fahrzeugen, z. B. im Stau, mit Hilfe einer Taste die Warnlichter betätigen muss, um die Aufmerksamkeit des auffahrenden Fahrzeugs zu erregen, ermöglicht es der Erfindungsgegenstand, dies zu automatisieren und so die Sicherheit zu erhöhen. Der Sensor misst in zwei Intervallen die Geschwindigkeit des herannahenden Fahrzeugs und löst ein Lichtsignal aus, sobald sein Abstand zum stehenden Fahrzeug gleich bzw. geringer ist als der seiner gemessenen Geschwindigkeit entsprechende Bremsweg. So löst das auffahrende Fahrzeug z.B. das Signal bei einer Geschwindigkeit von 100km/h (27,7m/s) bei einer Distanz von ca. 70m bzw. nach einer eintsprechenden Zeitdauer aus, wenn es bis zu diesem Moment seine Geschwindigkeit noch nicht reduziert hat, sich also im kritischen Abstand befindet.

Bei dem im Zentralcomputer gespeicherten Programm kann der Sicherheitsabstand oder Mindestabstand s nach weiteren Parametern korrigiert werden. Das Lichtsignal kann dann aktiviert werden, sobald die ermittelten Werte mit vorgegebenen Grenzwerten übereinstimmen oder sich diesen annähern. Verschiedene weitere Situationen, die eine Gefahr für die unmittelbare Fahrsituation der beteiligten Fahrzeuge beinhalten, werden so bei der Ermittlung erfindungsgemäß mit berücksichtigt. Insbesondere werden eine unterschiedliche mögliche Verzögerung der Fahrzeuge bei Trockenheit, bei Regen oder Schnee/Eis und unterschiedlichen, wie Winterreifen und Sommerreifen, sowie eine Verringerung der Sicht bei Nebel mitberücksichtigt.

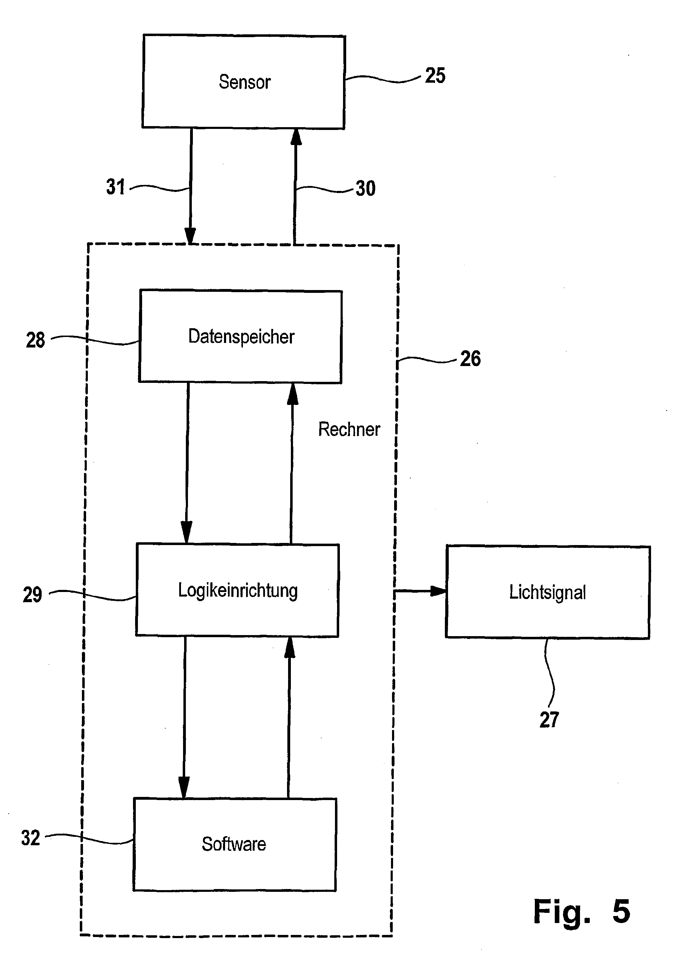

Fig. 5 zeigt eine Ausführung der Struktur des Systems. Zwischen dem Sensor 25 und dem Rechner 26 werden Daten bzw. Signale 30,31 ausgetauscht. Auch die Leuchtsignaleinrichtung 27 ist mit dem Rechner 26 verbunden. Der Rechner 26 weist ferner einen Datenspeicher 28, eine Logikeinrichtung 29 und ein Softwareprogramm 32 auf. Die Informationsdaten von dem Sensor/Laser 25 stehen in Verbindung mit dem Softwareprogramm 32 und dem Datenspeicher 28 im Rechner 26. Dem Softwareprogramm 32 ist die Logikeinrichtung 29 zugeordnet, mit deren Hilfe schließlich die Signaleinrichtung 27 angesteuert wird.

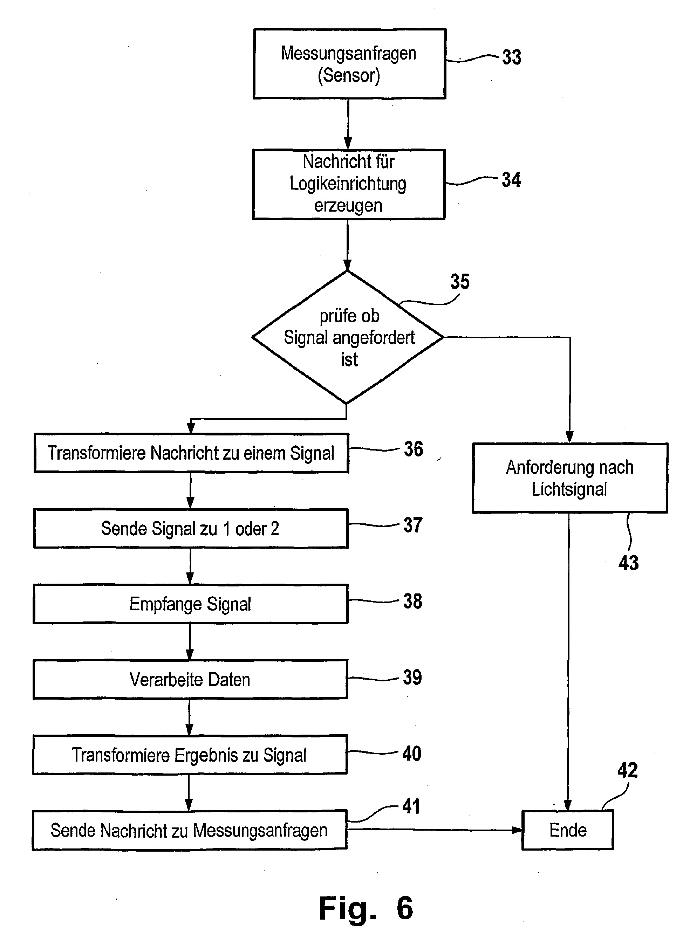

Fig. 6 zeigt ein Flussdiagramm zur Veranschaulichung der Funktionsabläufe bei dem Austausch von Informationsdaten zwischen dem Rechner 26 und dem Sensor 25. In einem ersten Schritt 33 wird festgestellt, dass vom Sensor 2,3 eine Anfrage nach einer Messung vorliegt. An Schritt 33 schließt sich ein Schritt 34 an, in dem mittels des Rechners 26 eine Nachricht für die Logikeinrichtung 29 erzeugt und weitergeleitet wird. An Schritt 34 schließt sich eine Abfrage 35 an, in der die Logikeinrichtung 29 prüft, ob es sich um eine Anforderung für das Signallicht 27 oder um Signale für den Sensor 25 handelt. Falls die Abfrage in Schritt 35 ergibt, dass ein Signal für den Sensor 25 vorliegt, schließt sich ein Schritt 36 an, in dem das Signal von der Logikeinrichtung 29 transformiert wird. Im darauffolgenden Schritt 37 wird das Signal zum Sensor 25 gesandt. In einem Schritt 38 empfängt der Sensor 25 das Signal, das in einem Schritt 39 weiterverarbeitet wird. Das Ergebnis der Weiterverarbeitung wird in einem Schritt 40 in ein Signal transformiert. Im darauffolgenden Schritt 41 wird aus dem Ergebnis ein Signal erzeugt, das in einem Schritt 42 an das Softwareprogramm 32 übermittelt wird. Mit Schritt 42 ist die Anfrage des Softwareprogramms 32 beantwortet und der Durchlauf beendet. Wird in der Abfrage 35 festgestellt, dass ein Signal vorliegt, das eine Anforderung nach dem Signallicht 27 erfordert, so schließt sich ein Schritt 43 an. Mit Schritt 43 wurde der Anforderung nach Vergleichsdaten entsprochen, so dass der Durchlauf des Diagramms beendet ist.

## Patentansprüche

1. System zur Vermeidung eines zu geringen Abstands von einem Folgefahrzeug zu einem vorausfahrenden Kraftfahrzeug,
wobei das vorausfahrende Kraftfahrzeug eine Einrichtung zur Ermittlung des Abstands zum Folgefahrzeug und zur Ermittlung der Relativgeschwindigkeit in Bezug auf das Folgefahrzeug aufweist, und
wobei auf Grundlage des ermittelten Abstands und der Relativgeschwindigkeit ein Mindestabstand ermittelt wird und beim Unterschreiten des Mindestabstands Maßnahmen zur Vermeidung einer weiteren Verringerung des Abstands durchgeführt werden, zwecks Vermeidung eines möglichen Auffahrunfalls,
**dadurch gekennzeichnet, dass** die Verkehrssituation vor dem vorausfahrenden Kraftfahrzeug ermittelt wird und unter Berücksichtigung der Verkehrssituation die Möglichkeit einer gefahrlosen Beschleunigung des vorausfahrenden Kraftfahrzeugs abgeschätzt wird und dass dann, wenn die Möglichkeit einer gefahrlosen Beschleunigung und ein Unterschreiten des Mindestabstands erkannt wird, als Maßnahme das vorausfahrende Kraftfahrzeug automatisch beschleunigt wird.

2. System nach Anspruch 1, **dadurch gekennzeichnet, dass** der Abstand und die Relativgeschwindigkeit und auf deren Grundlage ein aktueller Mindestabstand laufend ermittelt werden.

3. System nach Anspruch 1 oder 2, **dadurch gekennzeichnet, dass** aufgrund eines Vergleichs des aktuellen Mindestabstands mit dem tatsächlich ermittelten Abstand ein Gefahrenpotential ermittelt wird und nach Maßgabe des ermittelten Gefahrenpotentials die Intensität der Maßnahmen variiert wird.

4. System nach einem der Ansprüche 1 bis 3, **dadurch gekennzeichnet, dass** als Maßnahmen zur Vermeidung einer weiteren Verringerung des Abstands optische Warnsignale an den Fahrzeugführer des Folgefahrzeugs übermittelt werden.

5. System nach Anspruch 4, **dadurch gekennzeichnet, dass** als optische Warnsignale die bei einem Kraftfahrzeug bereits vorhandenen rückwärts gerichteten Leuchteinrichtungen, wie Bremslicht, Blinker, Warnblinker, Nebelschlussleuchte und Rückfahrscheinwerfer, eingesetzt werden.

6. System nach Anspruch 5, **dadurch gekennzeichnet, dass** die Anzahl, die Leuchtintensität und/oder Zeitdauer der optischen Signale nach Maßgaben des ermittelten Gefahrenpotentials variabel eingestellt werden.

7. System nach einem der vorangehenden Ansprüche, **dadurch gekennzeichnet, dass** bei einem Überschreiten des Mindestabstands die Maßnahmen zur Vermeidung einer weiteren Verringerung des Abstands durch das vorausfahrende Kraftfahrzeug nicht mehr durchgeführt werden.

8. System nach einem der Ansprüche 1 bis 7, **dadurch gekennzeichnet, dass** der Mindestabstand nach Maßgabe weiterer Größen, insbesondere einem ermittelten Fahrbahnzustand und äußerer Witterungsbedingungen, variiert wird.

9. System nach Anspruch 8, **dadurch gekennzeichnet, dass** als äußere Witterungsbedingungen die Sichtverhältnisse beeinflussende Faktoren, wie Nebel, Hagel und/oder Regen, berücksichtigt werden.

10. System nach Anspruch 8 oder 9, **dadurch gekennzeichnet, dass** als Fahrbahnzustand den Bremsweg beeinflussende Faktoren, wie Regennässe, Schneebedeckung, Eisglätte oder Verschmutzungen, berücksichtigt werden.

11. System nach einem der Ansprüche 8 bis 10, **dadurch gekennzeichnet, dass** als weitere Größen die die Fahrsicherheit oder Fahrtüchtigkeit des vorausfahrenden Kraftfahrzeugs beeinflussende Faktoren, wie ein Motorschaden, ein Reifenschaden oder Fehler in der Betriebsbremse, berücksichtigt werden.

## Claims

1. A system for preventing too close a distance between a motor vehicle that is driving ahead and a vehicle following behind,
wherein the motor vehicle that is driving ahead is equipped with a device for determining the distance from the vehicle following behind and for determining the speed relative to this vehicle which is following behind, and
wherein a minimum distance is determined based on the determined distance and relative speed and when this minimum distance is encroached upon, measures are taken in order to prevent a further reduction in the distance for the purpose of preventing a possible rear-end collision,
**characterized in that** the traffic situation in front of the motor vehicle that is driving ahead is determined and the possibility of a safe acceleration of the motor vehicle that is driving ahead is estimated, taking into account the traffic situation, and that if the possibility of a safe acceleration and an encroaching upon the minimum distance are detected, the motor vehicle that is driving ahead is automatically accelerated as a measure.

2. The system according to Claim 1, **characterized in that** the distance and the relative speed and, on the basis thereof, a current minimum distance are continually determined.

3. The system according to Claim 1 or 2, **characterized in that** a hazard potential is determined based on a comparison of the current minimum distance with the distance actually determined, and the intensity of the measures is varied in accordance with the determined hazard potential.

4. The system according to any one of Claims 1 to 3, **characterized in that** visual warning signals are transmitted to the driver of the vehicle following behind as measures for preventing a further reduction in the distance.

5. The system according to Claim 4, **characterized in that** the rear lighting devices already provided on a motor vehicle such as brake lights, indicators, hazard lights, rear fog lights and reversing lights are used as visual warning signals.

6. The system according to Claim 5, **characterized in that** the number, light intensity and/or duration of the visual signals is/are variably adjusted in accordance with the determined hazard potential.

7. The system according to any one of the preceding claims, **characterized in that** when the minimum distance is exceeded, the measures to prevent a further reduction in the distance are no longer taken by the motor vehicle that is driving ahead.

8. The system according to any one of Claims 1 to 7, **characterized in that** the minimum distance is varied in accordance with other variables, in particular, the determined road conditions and external weather conditions.

9. The system according to Claim 8, **characterized in that** factors which influence visibility such as fog, hail and/or rain are considered to be external weather conditions.

10. The system according to Claim 8 or 9, **characterized in that** factors which influence the braking distance such as rainwater, snow cover, icy roads or dirt are considered to be the road conditions.

11. The system according to any one of Claims 8 to 10, **characterized in that** factors which influence the driving safety or roadworthiness of the motor vehicle that is driving ahead such as engine damage, tire damage or failure in the service brake are considered to be additional variables.

## Revendications

1. Système destiné à éviter une distance trop faible entre un véhicule automobile qui suit et un véhicule automobile qui précède,
le véhicule automobile qui précède présentant un dispositif destiné à déterminer la distance par rapport au véhicule automobile qui suit et à déterminer la vitesse relative par rapport au véhicule automobile qui suit, et
une distance minimale étant déterminée sur la base de la distance déterminée et de la vitesse relative et, lors du passage au-dessous de la distance minimale, des mesures destinées à éviter une réduction supplémentaire de la distance étant mises en oeuvre en vue d'éviter une possible collision,
**caractérisé en ce que** la situation de circulation devant le véhicule automobile qui précède est déterminée, et la possibilité d'une accélération sans danger du véhicule automobile qui précède est estimée en prenant en compte la situation de circulation, et **en ce que**, ensuite, si la possibilité d'une accélération sans danger et un passage au-dessous de la distance minimale sont identifiées, le véhicule automobile qui précède est accéléré automatiquement à titre de mesure.

2. Système selon la revendication 1, **caractérisé en ce que** la distance et la vitesse relative et, sur leur base, une distance minimale actuelle sont déterminées en permanence.

3. Système selon la revendication 1 ou 2, **caractérisé en ce que**, sur la base d'une comparaison de la distance minimale actuelle avec la distance effectivement déterminée, un danger potentiel est déterminé et l'intensité des mesures est modulée en fonction du danger potentiel déterminé.

4. Système selon une des revendications 1 à 3, **caractérisé en ce que**, en tant que mesures destinées à éviter une réduction supplémentaire de la distance, des signaux d'avertissement optiques sont transmis au conducteur du véhicule automobile qui suit.

5. Système selon la revendication 4, **caractérisé en ce que**, en tant que signaux d'avertissement optiques, les dispositifs lumineux dirigés vers l'arrières déjà présents sur un véhicule automobile tels que les feux stop, les clignotants, les feux de détresse, les feux de brouillard arrière et les phares de recul sont utilisés.

6. Système selon la revendication 5, **caractérisé en ce que** le nombre, l'intensité lumineuse et/ou la durée des signaux optiques sont réglés de façon variable en fonction du danger potentiel déterminé.

7. Système selon une des revendications précédentes, **caractérisé en ce que**, lors d'un passage au-dessus de la distance minimale, les mesures destinées à éviter une réduction supplémentaire de la distance ne sont plus mises en oeuvre par le véhicule automobile qui précède.

8. Système selon une des revendications 1 à 7, **caractérisé en ce que** la distance minimale est modulée en fonction d'autres grandeurs, en particulier d'un état déterminé de la chaussée et de conditions météorologiques extérieures.

9. Système selon la revendication 8, **caractérisé en ce que**, en tant que conditions météorologiques extérieures, des facteurs influençant les conditions de visibilité tels que le brouillard, la grêle et/ou la pluie sont pris en compte.

10. Système selon la revendication 8 ou 9, **caractérisé en ce que**, en tant qu'état de la chaussée, des facteurs influençant la distance de freinage tels qu'une chaussée humide, la présence de neige, la présence de verglas ou des encrassements sont pris en compte.

11. Système selon une des revendications 8 à 10, **caractérisé en ce que**, en tant qu'autres grandeurs, les facteurs influençant la sécurité de conduite ou l'aptitude à la conduite tels qu'une avarie de moteur, un endommagement de pneu ou un défaut dans le frein de service sont pris en compte.
